# EUROPÄISCHE PATENTSCHRIFT

(11) **EP 3 751 074 B1**
(45) Veröffentlichungstag und Bekanntmachung des Hinweises auf die Patenterteilung: **20.04.2022**
(21) Anmeldenummer: 20179260.3
(22) Anmeldetag: 10.06.2020
(51) Int. Cl.: E04F 11/18, E06B 11/04, E04H 17/14, E04H 17/16, E06B 3/54, F16B 2/12, F16B 7/04, F16B 2/14

(54) **VORRICHTUNG ZUM VERBINDEN EINES ANSCHLUSSPROFILS ODER EINES FÜLLELEMENTS AUS EINEM SPRÖDEN MATERIAL MIT EINEM NUTENSTEIN EINES NUTENPROFILS**
DEVICE FOR CONNECTING A CONNECTION PROFILE OR A FILLING ELEMENT MADE OF A BRITTLE MATERIAL TO A SLIDING BLOCK OF A GROOVED PROFILE
DISPOSITIF DE RACCORDEMENT D'UN PROFILÉ DE RACCORDEMENT OU D'UN ÉLÉMENT DE REMPLISSAGE D'UNE MATIÈRE FRAGILE DOTÉ D'UN COULISSEAU D'UN PROFILÉ DE RAINURE

(30) Priorität: 13.06.2019 DE 102019116112
(43) Veröffentlichungstag der Anmeldung: 16.12.2020
(73) Patentinhaber: VALU GmbH, 35119 Rosenthal (DE)
(72) Erfinder: KRÄMER, Jan, 35110 Frankenau (DE); BÖHL, Harald, 35285 Gemünden (DE)
(74) Vertreter: Patentanwälte Olbricht Buchhold Keulertz

(56) Entgegenhaltungen:
- EP-A1- 2 116 676
- US-A1- 2009 212 271
- US-A1- 2013 175 488
- US-B1- 6 202 383

## Beschreibung

Die Erfindung betrifft eine Vorrichtung zum Verbinden eines Anschlussprofils oder eines Füllelements aus einem spröden Material mit einem Nutenstein eines Nutenprofils gemäß dem Oberbegriff von Anspruch 1.

Für die Herstellung von Zäunen können Systemprofile genutzt werden, wobei Zaunpfosten durch Aluminiumprofile mit mindestens einer Nut bereitgestellt werden. Die Nuten sind zur Aufnahme von Nutensteinen und zur Aufnahme von Verbindungselementen von Füllelementen geeignet. Die Füllelemente überbrücken dabei den Bereich zwischen zwei Zaunpfosten und sind mit beiden Zaunpfosten verbunden. Dabei ist bekannt, dass die Füllelemente aus unterschiedlichen Materialien aufgebaut sein können. Wenn spröde Materialien für die Füllelemente verwendet werden sollen, können diese nicht direkt in die Nuten eingeführt werden, da die Verbindungselemente in den Nuten großen Kräften ausgesetzt sind, die spröde Materialien beschädigen können.

Zur Verbindung von Füllelementen, die spröde Materialien aufweisen, werden daher spezielle Verbindungselemente, z. B. Glashalter, verwendet, die mittels Nutensteinen in der Nut der Zaunpfosten verankert werden. Allerdings ist die Verwendung dieser Verbindungselemente unflexibel.

Das Gleiche gilt für das Verbinden von Anschlussprofilen, die zur Anlage an bereits bestehende Profile mit eckigem oder rundem Querschnitt ausgebildet sind. Das Anschlussprofil wird dabei mit einem weiteren Nutenstein und einem Brückenelement mit einem Systemprofil verbunden. Aus EP 2 116 676 A1 ist ein Metallprofil zum Herstellen von Zäunen mit Gelenken bekannt. Ein Nutenstein, der in das Metallprofil einsetzbar ist, kann mit einem Verbindungselement über ein Gelenk an einen schwenkbaren Halter für ein weiteres Profil oder eine Füllplatte befestigt sein. In einer Öffnung des Halters ist ein Bolzen als Drehachse für den Halter angeordnet, der den Halter mit dem Gelenk verbindet.

Weiter ist aus US 6,202,383 B1 ein Profil zum Verbinden von Paneelen bekannt. In das Profil kann ein Nutenstein eingesetzt werden, der mit einem Verbindungselement mit einem Tragarm verbunden ist. An dem Tragarm sind Halter für die Paneele schwenkbare gelagert. Die Halter sind über einen Bolzen mit einer Mutter mit dem Tragarm verbunden, wobei die Bolzen sich durch den Tragarm erstrecken.

Als Aufgabe der Erfindung kann daher angesehen werden, eine verbesserte Vorrichtung zum Verbinden eines Anschlussprofils oder eines Füllelements aus einem spröden Material mit einem Nutenstein eines Nutenprofils bereitzustellen, die eine vereinfachte Verwendung aufweist.

Hauptmerkmale der Erfindung sind im kennzeichnenden Teil der Ansprüche 1 und 16 angegeben. Ausgestaltungen sind Gegenstand der Ansprüche 2 bis 15 und der nachfolgenden Beschreibung.

Bei einer Vorrichtung zum Verbinden eines Anschlussprofils oder eines Füllelements aus einem spröden Material mit einem Nutenstein eines Nutenprofils, wobei die Vorrichtung ein Verbindungselement und ein Adapterelement zum Verbinden mit dem Nutenstein aufweist, ist erfindungsgemäß vorgesehen, dass das Verbindungselement um das Adapterelement schwenkbar an dem Adapterelement gelagert ist.

Mittels der Erfindung wird ein schwenkbares Verbindungselement zum Verbinden eines Anschlussprofils oder von Füllelementen aus einem spröden Material bereitgestellt, der das gehaltene Füllelement relativ zur Nut des Nutenprofils verschwenkt anordnen kann. Das Verbindungselement ist dazu über ein Adapterelement mit einem Nutenstein verbunden, der in einer Nut des Nutenprofils angeordnet ist. Dabei ist das Verbindungselement schwenkbar an dem Adapterelement gelagert. Das Adapterelement bewirkt dabei, dass das Verbindungselement in einem Abstand von dem Nutenprofil angeordnet wird, wobei das Nutenprofil in der Regel einen eckigen Querschnitt mit ebenen Flächen aufweist. Das Nutenprofil kann jedoch auch einen runden Querschnitt mit gebogenen Flächen aufweisen. Damit erhält das Verbindungselement genügend Platz für eine Verschwenkung. Das Verbindungselement kann dabei ein Nutenstein sein, der mit einem Anschlussprofil verbunden werden kann. Damit kann ein Anschlussprofil in einem flexiblen Winkel mit dem Adapterelement verbunden werden. D.h., dass das Anschlussprofil in einem flexiblen Winkel zu einem bereits bestehenden Systemprofil angeordnet werden kann und einen Anschluss des bereits bestehenden Systemprofils mit dem Nutenprofil "um die Ecke" ermöglicht wird. Alternativ kann das Verbindungselement ein Halter für ein sprödes Füllelement, z. B. ein Glashalter sein. Mittels der schwenkbaren Lagerung an dem Adapterprofil kann das Verbindungselement sicher gegenüber dem Nutenprofil verschwenkt werden, da die Haltekräfte über das Adapterprofil und nicht direkt über das Verbindungselement an das Nutenprofil bzw. den Nutenstein übertragen werden. Mittels der Vorrichtung wird daher die Verwendung von Füllelementen, die spröde Materialien aufweisen, vereinfacht.

Das Adapterelement kann dabei eine Außen-Gleitfläche umfassen, wobei die Außen-Gleitfläche die Form eines Mantelflächenstücks eines Zylinders aufweist, wobei das Verbindungselement gleitend an der Außen-Gleitfläche gelagert ist.

Das Mantelflächenstück des Zylinders kann dabei die Mantelfläche eines tortenstückförmigen Ausschnitts aus dem Zylinder sein und beispielsweise im Wesentlichen eine Halbzylinder-Mantelfläche sein. Das Verbindungselement gleitet daher an einer kreisförmig gebogenen Fläche entlang, wenn er relativ zum Adapterelement geschwenkt wird. Damit wird effektiv eine Schwenkbarkeit des Verbindungselements in Bezug auf das Adapterelement ermöglicht und die Handhabbarkeit der Vorrichtung vereinfacht.

Dabei kann das Verbindungselement um eine Zylinderachse der Außen-Gleitfläche schwenkbar gelagert sein.

Die Zylinderachse ist dabei die Längsachse des Zylinders, auf dem das Mantelflächenstück basiert.

Das Verbindungselement kann weiter eine rinnenförmige Gleitfläche aufweisen, wobei die rinnenförmige Gleitfläche passend zu einem Teilumfang der Außen-Gleitfläche gebildet ist.

Damit wird zwischen dem Verbindungselement und dem Adapterelement eine Kontaktfläche über die gesamte Breite der rinnenförmigen Gleitfläche bereitgestellt. Dies verbessert die Kraftübertragung zwischen dem Verbindungselement und dem Adapterelement und erhöht die Stabilität der Vorrichtung.

Weiter weist die Vorrichtung ein Gegenelement für das Verbindungselement auf, wobei das Gegenelement in einem Innenraum des Adapterelements angeordnet ist und mit dem Verbindungselement verbunden ist.

Das Gegenelement befestigt mittels seiner Anordnung im Innenraum des Adapterelements das Verbindungselement an dem Adapterelement. Damit wird das Verbinden des Verbindungselements mit dem Adapterelement vereinfacht.

Der Innenraum kann dabei mindestens ein Führungselement für das Gegenelement aufweisen, wobei das Gegenelement gleitend an dem mindestens einen Führungselement gelagert ist.

Das Führungselement kann dabei im installierten Zustand zwischen dem Adapterelement und dem Gegenelement angeordnet sein. Das Führungselement kann damit das Gegenelement in Richtung des Nutenprofils abstützen. Damit wird eine erhöhte Stabilität der Halterung des Verbindungselements ermöglicht.

Weiter kann das Gegenelement stabförmig sein und eine Bohrung mit einem Innengewinde zur Aufnahme eines Außengewindes eines Befestigungselements umfassen.

Die Stab-Form des Gegenelements stellt eine gebogene Fläche bereit, die im Innenraum an einer Wand des Innenraums entlanggleiten kann. Damit wird die Reibung zwischen der Wand des Innenraums und dem Gegenelement bei einem Schwenken des Verbindungselements reduziert. Weiter wird mit dem Innengewinde in Kombination mit einem passenden Befestigungselement, z. B. einer Schraube, eine effektive und einfach herzustellende Verbindung zwischen dem Verbindungselement und dem Gegenelement bereitgestellt.

Der Innenraum weist dabei eine spaltförmige Öffnung, die sich zumindest teilweise entlang einer Schwenkrichtung zwischen dem Gegenelement und dem Verbindungselement erstreckt, in der das Verbindungselement gegenüber dem Adapterelement verschwenkbar ist, auf und das Gegenelement ist mittels eines Befestigungselements durch die spaltförmige Öffnung mit dem Verbindungselement verbunden.

Die spaltförmige Öffnung kann dabei eine Führung für das Befestigungselement bereitstellen und die Verbindung zwischen dem Verbindungselement und dem Gegenelement ermöglichen.

Dabei kann das mindestens eine Führungselement der spaltförmigen Öffnung gegenüber angeordnet sein.

Damit kann das mindestens eine Führungselement Kräfte, die von dem Verbindungselement auf das Gegenelement durch die spaltförmige Öffnung übertragen werden, senkrecht bzw. im Wesentlichen senkrecht aufnehmen und auf das Adapterelement übertragen. Dies verbessert die Stabilität der Vorrichtung.

Der Innenraum kann weiter eine Innen-Gleitfläche aufweisen, die sich mindestens teilweise zwischen dem Gegenelement und dem Verbindungselement erstreckt, wobei das Gegenelement gleitend an der Innen-Gleitfläche gelagert ist.

Damit wird das Verschwenken des Verbindungselements vereinfacht, da die gleitende Lagerung des Gegenelements die Reibung bei dem Verschwenken reduziert.

Weiter kann die Innen-Gleitfläche die Form eines Mantelflächenstücks eines Zylinders aufweisen.

Die Querschnittsform der Innen-Gleitfläche ist damit bogenförmig ausgebildet und ermöglicht über das Gegenelement eine bogenförmige Schwenkbewegung des Verbindungselements. Dies vereinfacht die Handhabung der Vorrichtung.

Das Adapterelement kann ein ebenes Außen-Flächenelement zum Verbinden mit einem Nutenstein aufweisen, wobei das ebene Außen-Flächenelement von der Außen-Gleitfläche weg gerichtet ist.

Das Außen-Flächenelement kann dabei an einer Fläche angeordnet sein, die in Kombination mit der Außen-Gleitfläche eine vollständige Mantelfläche des Adapterelements bildet. Mit dem ebenen Außen-Flächenelement wird eine sichere Verbindung des Adapterelements mit einem Nutenstein bereitgestellt.

Dabei kann das ebene Außen-Flächenelement mindestens eine innere Durchgangsöffnung zum Durchführen eines Schafts eines Befestigungselements zum Verbinden mit einem Nutenstein aufweisen.

Weiter kann das Adapterelement ein konkaves Flächenelement aufweisen, das lateral an das Außen-Flächenelement anschließt. Dies ist für eine Halterung des Adapterelements an einem Rundprofil günstiger.

Weiter kann die Außen-Gleitfläche mindestens eine äußere Durchgangsöffnung zum Durchführen eines Kopfs eines Befestigungselements zum Verbinden mit einem Nutenstein aufweisen, wobei die äußere Durchgangsöffnung der inneren Durchgangsöffnung gegenüber angeordnet ist.

Mittels der äußeren Durchgangsöffnung kann ein Befestigungselement ohne großen Aufwand durch die innere Durchgangsöffnung in den Nutenstein eingeführt werden, um das Adapterelement mit dem Nutenstein zu verbinden.

Das Adapterelement kann dabei die Form eines Halbrund-Hohlprofils aufweisen.

Es kann weiter vorgesehen sein, dass das Verbindungselement um das Adapterelement einen Schwenkbereich zwischen 90° und 180°, vorzugsweise zwischen 95° und 135°, weiter vorzugsweise zwischen 100° und 120°, am meisten bevorzugt von 106° aufweist.

Mit diesen Schwenkbereichen können die meisten bzw. alle Winkelpositionen, die für die Anordnung mehrerer aufeinander folgender Füllelemente entlang eines Zauns benötigt werden, bereitgestellt werden.

Die Aufgabe wird weiter mittels eines Systems gelöst, wobei das System umfasst: ein Nutenprofil mit einer sich entlang des Nutenprofils erstreckenden Nut, einem Nutenstein, der entlang der Nut gleitend gelagert ist und in einer Richtung senkrecht zum Nutenprofil formschlüssig in der Nut angeordnet ist, und eine Vorrichtung nach der vorangegangenen Beschreibung, wobei das Adapterelement mit dem Nutenstein verbunden ist.

Vorteile und Wirkungen sowie Weiterbildungen des Systems ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Weiter wird die Aufgabe mittels eines Adapterelements zum Verbinden mit einem Nutenstein eines Nutenprofils gelöst, wobei das Adapterelement zum schwenkbaren Lagern eines Verbindungselements um das Adapterelement ausgebildet ist, wobei das Adapterelement ein Gegenelement für das Verbindungselement aufweist, wobei das Gegenelement in einem Innenraum des Adapterelements angeordnet ist und mit dem Verbindungselement verbunden ist, dadurch gekennzeichnet, dass der Innenraum eine spaltförmige Öffnung, die sich zumindest teilweise entlang einer Schwenkrichtung, in der das Verbindungselement gegenüber dem Adapterelement verschwenkbar ist, zwischen dem Gegenelement und dem Verbindungselement erstreckt, aufweist und das Gegenelement mittels eines Befestigungselements durch die spaltförmige Öffnung mit dem Verbindungselement verbunden ist.

Vorteile und Wirkungen sowie Weiterbildungen des Adapterelements ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a, b: eine schematische Darstellung des Systems;
- Fig. 2a-c: schematische Darstellungen verschiedener Ansichten des Systems; und
- Fig. 3a-c: schematische Darstellungen verschiedener Ansichten des Adapterelements.

In den nachfolgenden Figuren wird die Vorrichtung zum Verbinden eines Füllelements aus einem spröden Material mit einem Nutenstein eines Nutenprofils in ihrer Gesamtheit mit dem Referenzzeichen 10 bezeichnet.

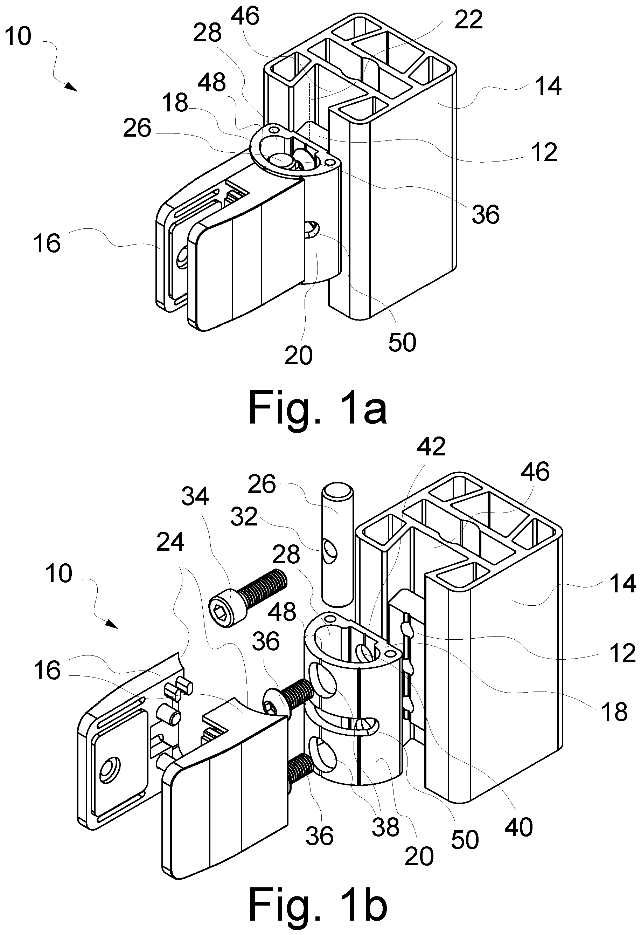

Die Vorrichtung 10 weist gemäß Figur 1a ein Verbindungselement 16 und ein Adapterelement 18 zum Verbinden mit einem Nutenstein 12 auf. Das Verbindungselement 16 kann dabei zum Beispiel ein Glashalter sein, der ein Füllelement in Form einer Glasplatte umklammert und mit dem Füllelement verbunden ist. Alternativ kann das Verbindungselement ein weiterer Nutenstein sein. Die Klammer des Verbindungselements 16 kann das Füllelement zum Beispiel mittels Reibschluss halten.

Das Verbindungselement 16 ist schwenkbar an dem Adapterelement 18 gelagert und kann um das Adapterelement 18 verschwenkt werden.

Das Adapterelement 18 kann mittels Befestigungselementen 36, die in Figur 1a als Schrauben ausgebildet sind, mit einem Nutenstein 12 verbunden werden, wobei der Nutenstein 12 in einer Nut 46 eines Nutenprofils 14 angeordnet sein kann. Die Nut 46 erstreckt sich dabei entlang des Nutenprofils 14. Weiter kann die Nut 46 dabei ein Schwalbenschwanzprofil aufweisen und der Nutenstein 12 im Querschnitt trapezförmig sein, wobei die Trapezform passend zu dem Schwalbenschwanzprofil ausgebildet ist. Damit wird der Nutenstein 12 formschlüssig in der Nut 46 gehalten. Weiter kann der Nutenstein 12 entlang der Nut 46 verschoben werden.

Zum Verbinden mit den Nutenstein 12 weist das Adapterelement 18 ein ebenes Außen-Flächenelement 42 auf, das an dem Nutenstein 12 anliegt. Das ebene Außen-Flächenelement 42 ist von der Außen-Gleitfläche 20 weg gerichtet.

Weiter kann das Adapterelement 18 ein konkaves Flächenelement aufweisen (nicht dargestellt), das lateral an das Außen-Flächenelement 42 anschließt. Dies ist für eine Halterung des Adapterelements 18 an einem Rundprofil günstiger.

Weiter umfasst das Adapterelement 18 eine Außen-Gleitfläche 20, die die Form eines Mantelstücks eines Zylinders aufweist. Dabei hat die Außen-Gleitfläche 20 eine Form, die aus einem Ausschnitt eines Zylindermantels besteht. Dies kann zum Beispiel die Mantelfläche eines Tortenstückausschnitts des Zylinders sein.

Das Verbindungselement 16 ist gleitend an der Außen-Gleitfläche 20 gelagert. Weiter ist das Verbindungselement 16 dabei um eine Zylinderachse 22 des Zylinders, der der Außen-Gleitfläche 20 zu Grunde liegt, um das Adapterelement 18 schwenkbar gelagert. Das Verbindungselement 16 gleitet dabei während des Verschwenkens an der Außen-Gleitfläche 20 entlang.

Die Verbindung des Verbindungselements 16 mit der Adapterelement 18 wird mittels eines Gegenelements 26 bewirkt, das in einem Innenraum 28 des Adapterelements 18 angeordnet ist und mit dem Verbindungselement 16 verbunden ist.

Dabei weist das Gegenelement 26 gemäß Figur 1b eine Bohrung 32 auf, in dem ein Innengewinde angeordnet ist. Das Verbindungselement 16 kann dabei mittels eines Befestigungselements 34, das in Form einer Schraube ausgebildet sein kann, durch das Adapterelement 18 hindurch mit dem Gegenelement 26 verbunden sein. Dazu weist das Adapterelement 28 eine spaltförmige Öffnung 50 auf, die an der Außen-Gleitfläche 20 angeordnet ist. Die spaltförmige Öffnung 50 erstreckt sich entlang eines Umfangs um die Zylinderachse 22.

Das Befestigungselement 34 verbindet dabei das Verbindungselement 16 durch die spaltförmige Öffnung 50 mit dem Gegenelement 26. Die spaltförmige Öffnung 50 führt das Befestigungselement 36 dabei um die Zylinderachse 22, wenn das Verbindungselement 16 um das Adapterelement 18 geschwenkt wird.

Das Verbindungselement 16 kann dabei aus zwei Teilen hergestellt sein, die jeweils zur Anlage an einer Seite eines Füllelements ausgebildet sind. Die Teile des Verbindungselements 16 umgreifen das Füllelement und sind miteinander verbunden.

Das Verbindungselement 16 weist dabei eine rinnenförmige Gleitfläche 24 auf, die passend zu der Außen-Gleitfläche 20 des Adapterelement 18 ausgebildet ist. Die rinnenförmige Gleitfläche 24 weist ebenfalls eine Form auf, die aus einem Ausschnitt eines Zylindermantels besteht. Der Zylindermantel hat dabei den gleichen Radius wie der Zylindermantel, der der Außen-Gleitfläche 20 zu Grunde liegt. Weiter überstreicht die rinnenförmige Gleitfläche 24 einen kleineren Winkel als die Außen-Gleitfläche 20. Die Außen-Gleitfläche 20 erstreckt sich daher in Umfangsrichtung über einen größeren Bereich, sodass die rinnenförmige Gleitfläche 24 in Umfangsrichtung um die Zylinderachse 22 entlang der Außen-Gleitfläche 20 bewegt werden kann.

Der Innenraum 28 des Adapterelements 18 weist eine Innen-Gleitfläche 48 auf, die an derselben Wand des Adapterelements 18 wie die Außen-Gleitfläche 20 angeordnet ist. Dabei bilden die Innen-Gleitfläche 48 und die Außen-Gleitfläche 20 gegenüberliegende Seiten derselben Wand.

Das Gegenelement 26 ist dabei stabförmig ausgebildet und gleitend an der Innen-Gleitfläche 48 gelagert. Bei einer Schwenkbewegung des Verbindungselements 16 gleitet das Gegenelement 26 an der Innen-Gleitfläche 48 entlang.

Das Adapterelement 18 weist an der Wand des Innenraums 28, an der die Außen-Gleitfläche 20 angeordnet ist, eine äußere Durchgangsöffnung 38 auf, durch die das Befestigungselement 36 durchgeführt werden kann. D.h., dass die äußere Durchgangsöffnung 38 einen Durchmesser aufweist, der größer als ein Kopf des Befestigungselement 36 ist.

An der der Außen-Gleitfläche 20 gegenüberliegenden Wand, an der das ebene Außen-Flächenelement 42 angeordnet ist, weist das Adapterelement 18 eine innere Durchgangsöffnung 40 auf, die der äußeren Durchgangsöffnung 38 gegenüber angeordnet ist, d. h. die Mittelpunkte der inneren und der äußeren Durchgangsöffnungen 38, 40 sind fluchtend zueinander angeordnet. Das Befestigungselement 36 kann dabei durch die äußere Durchgangsöffnung 38 in der inneren Durchgangsöffnung 40 angeordnet werden.

Dabei weist die innere Durchgangsöffnung 40 einen Durchmesser auf, der kleiner als der Kopf des Befestigungselements 36 jedoch größer als ein Schaft des Befestigungselement 36 ist. D.h., dass der Kopf des Befestigungselements 36 nicht durch die innere Durchgangsöffnung 40 durchgeführt werden kann. Die innere Durchgangsöffnung 40 ist dabei an dem ebenen Außen-Flächenelement 42 angeordnet und kann über eine Befestigungsöffnung eines Nutensteins 12 angeordnet werden. Das Befestigungselement 36 kann damit durch die innere Durchgangsöffnung 40 mit dem Nutenstein 12 verbunden werden und hält das Adapterelement 18 an dem Nutenstein 12.

Die Anzahl der inneren und äußeren Durchgangsöffnungen 38, 40 kann dabei anhängig von der Länge des Adapterelements 18 variieren.

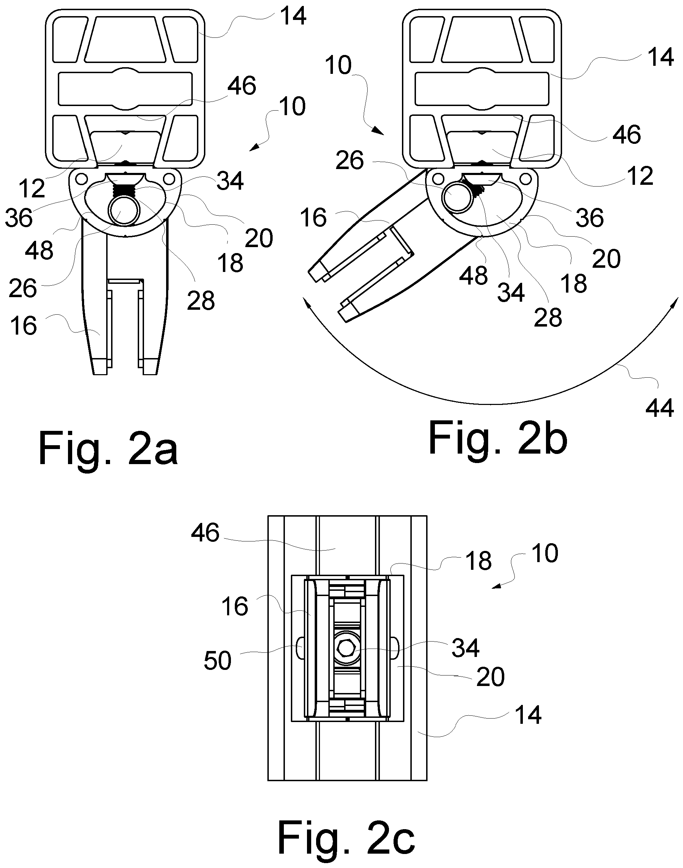

Figur 2a zeigt eine Ansicht der Vorrichtung 10 von oben. Dabei ist das Verbindungselement 16 in einer Ausrichtung angeordnet, die sich senkrecht von der Nut 46 weg erstreckt. In Figur 2b ist das Verbindungselement 16 im Vergleich zu der Ausrichtung in der Figur 2a verschwenkt angeordnet.

Die rinnenförmige Gleitfläche 24 des Verbindungselements 16 ist dabei in beiden Ausrichtungen nahezu vollständig an der Außen-Gleitfläche 20 angeordnet. Weiter ist im Vergleich der beiden Figuren dargestellt, dass das Gegenelement 26 an der Innen-Gleitfläche 48 geführt wird.

Der Schwenkbereich 44 ist dabei mittels eines gebogenen Doppelpfeils dargestellt. Der Schwenkbereich 44 kann dabei zwischen 90° und 180°, vorzugsweise zwischen 95° bis 135°, weiter bevorzugt zwischen 100° und 120°, am meisten bevorzugt 106° betragen. Dargestellt ist ein Schwenkbereich 44 mit einem Schwenkwinkel von 106°.

In Figur 2c ist eine Ansicht der Vorrichtung 10 dargestellt, bei der die Sicht auf das Nutenprofil 46 dargestellt ist. Das Befestigungselement 34 ist dabei zwischen den beiden Hälften des Verbindungselements 16 angeordnet. Das Adapterelement 18 ist weiter zwischen dem Verbindungselement 16 und dem Nutenprofil 14 angeordnet.

Die Vorrichtung 10, das Nutenprofil 14 und Nutenstein 12 bilden ein System, mit dem ein Füllelement an einem Nutenprofil 14 unter einem variablen Winkel befestigt werden kann.

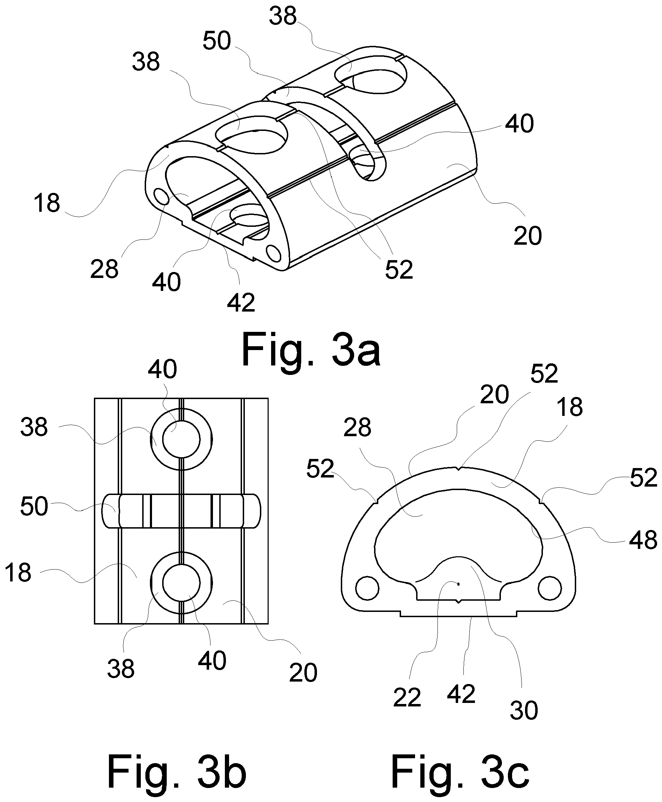

In den Figuren 3a bis 3c sind verschiedene Ansichten des Adapterelements 18 dargestellt. Figur 3a zeigt dabei eine perspektivische Darstellung des Adapterelements 18. Das Adapterelement 18 ist dabei als ein Halbrund-Hohlprofil ausgebildet. Der Innenraum 28 wird dabei durch den Hohlraum des Halbrund-Hohlprofils gebildet.

Figur 3b zeigt eine Frontaldarstellung des Adapterelements 18. Dabei ist dargestellt, dass die spaltförmige Öffnung 50 zwischen zwei äußeren Durchgangsöffnungen 38 angeordnet ist. Dabei ist die spaltförmige Öffnung 50 mittig entlang einer Erstreckungsrichtung des Halbrund-Hohlprofils angeordnet.

Gemäß Figur 3c weist das Adapterelement 18 ein Führungselement 30 auf, das im Innenraum 28 mit dem Adapterelement 18 verbunden ist. Das Führungselement 30 kann dabei der spaltförmigen Öffnung 50 gegenüber angeordnet sein. Das Führungselement 30 kann dabei eine Führung für das Gegenelement 26 bilden, wobei das Führungselement 30 einer der Innen-Gleitfläche 48 gegenüberliegende Führung bewirkt. Das Gegenelement 26 wird damit von der Zylinderachse 22 aus gesehen in radialer Richtung auf zwei einander gegenüberliegenden Seiten geführt.

Weiter kann das Adapterelement 18 Markierungsrinnen 52 aufweisen, die verschiedene Winkelstellungen des Verbindungselements 16 markieren können. So können zum Beispiel die Winkelstellungen 0° und +/-45° durch die Markierungen 52 angezeigt werden.

Die Erfindung ist nicht auf eine der vorbeschriebenen Ausführungsformen beschränkt, sondern in vielfältiger Weise abwandelbar.

### Bezugszeichenliste

- 10: Vorrichtung
- 12: Nutenstein
- 14: Nutenprofils
- 16: Verbindungselement
- 18: Adapterelement
- 20: Außen-Gleitfläche
- 22: Zylinderachse
- 24: rinnenförmige Gleitfläche
- 26: Gegenelement
- 28: Innenraum
- 30: Führungselement
- 32: Bohrung
- 34: Befestigungselement
- 36: Befestigungselement
- 38: äußere Durchgangsöffnung
- 40: innere Durchgangsöffnung
- 42: Außen-Flächenelement
- 44: Schwenkbereich
- 46: Nut
- 48: Innen-Gleitfläche
- 50: spaltförmige Öffnung
- 52: Markierungsrinne

## Patentansprüche

1. Vorrichtung zum Verbinden eines Anschlussprofils oder eines Füllelements aus einem spröden Material mit einem Nutenstein (12) eines Nutenprofils (14), wobei die Vorrichtung (10) ein Verbindungselement (16) und ein Adapterelement (18) zum Verbinden mit dem Nutenstein (12) aufweist, wobei das Verbindungselement (16) um das Adapterelement (18) schwenkbar an dem Adapterelement (18) gelagert ist, wobei die Vorrichtung (10) ein Gegenelement (26) für das Verbindungselement (16) aufweist, wobei das Gegenelement (26) in einem Innenraum (28) des Adapterelements (18) angeordnet ist und mit dem Verbindungselement (16) verbunden ist, **dadurch gekennzeichnet, dass** der Innenraum (28) eine spaltförmige Öffnung (50), die sich zumindest teilweise entlang einer Schwenkrichtung, in der das Verbindungselement (16) gegenüber dem Adapterelement (18) verschwenkbar ist, zwischen dem Gegenelement (26) und dem Verbindungselement (16) erstreckt, aufweist und das Gegenelement (26) mittels eines Befestigungselements (34) durch die spaltförmige Öffnung mit dem Verbindungselement (16) verbunden ist.

2. Vorrichtung nach Anspruch 1, **dadurch gekennzeichnet, dass** das Adapterelement (18) eine Außen-Gleitfläche (20) umfasst, wobei die Außen-Gleitfläche (20) die Form eines Mantelflächenstücks eines Zylinders aufweist, wobei das Verbindungselement (16) gleitend an der Außen-Gleitfläche (20) gelagert ist.

3. Vorrichtung nach Anspruch 2, **dadurch gekennzeichnet, dass** das Verbindungselement (16) um eine Zylinderachse (22) der Außen-Gleitfläche (20) schwenkbar gelagert ist.

4. Vorrichtung nach Anspruch 2 oder 3, **dadurch gekennzeichnet, dass** das Verbindungselement (16) eine rinnenförmige Gleitfläche (24) aufweist, wobei die rinnenförmige Gleitfläche (24) passend zu einem Teilumfang der Außen-Gleitfläche (20) gebildet ist.

5. Vorrichtung nach einem der Ansprüche 1 bis 4, **dadurch gekennzeichnet, dass** der Innenraum (28) mindestens ein Führungselement (30) für das Gegenelement (26) aufweist, wobei das Gegenelement (26) gleitend an dem mindestens einen Führungselement (30) gelagert ist.

6. Vorrichtung nach einem der Ansprüche 1 bis 5, **dadurch gekennzeichnet, dass** das Gegenelement (26) stabförmig ist und eine Bohrung (32) mit einem Innengewinde zur Aufnahme eines Außengewindes eines Befestigungselements (34) umfasst.

7. Vorrichtung nach Anspruch 4, **dadurch gekennzeichnet, dass** das mindestens eine Führungselement (30) der spaltförmigen Öffnung (50) gegenüber angeordnet ist.

8. Vorrichtung nach einem der Ansprüche 1 bis 6, **dadurch gekennzeichnet, dass** der Innenraum (28) eine Innen-Gleitfläche (48) aufweist, die sich mindestens teilweise zwischen dem Gegenelement (26) und dem Verbindungselement (16) erstreckt, wobei das Gegenelement (26) gleitend an der Innen-Gleitfläche (48) gelagert ist.

9. Vorrichtung nach Anspruch 8, **dadurch gekennzeichnet, dass** die Innen-Gleitfläche (48) die Form eines Mantelflächenstücks eines Zylinders aufweist.

10. Vorrichtung nach einem der Ansprüche 2 bis 9, **dadurch gekennzeichnet, dass** das Adapterelement (18) ein ebenes Außen-Flächenelement (42) zum Verbinden mit einem Nutenstein (12) aufweist, wobei das ebene Außen-Flächenelement (42) von der Außen-Gleitfläche (20) weg gerichtet ist.

11. Vorrichtung nach Anspruch 10, **dadurch gekennzeichnet, dass** das ebene Außen-Flächenelement mindestens eine innere Durchgangsöffnung (40) zum Durchführen eines Schafts eines Befestigungselements (36) zum Verbinden mit einem Nutenstein (12) aufweist.

12. Vorrichtung nach Anspruch 11, **dadurch gekennzeichnet, dass** die Außen-Gleitfläche (20) mindestens eine äußere Durchgangsöffnung (38) zum Durchführen eines Kopfs eines Befestigungselements (36) zum Verbinden mit einem Nutenstein (12) aufweist, wobei die äußere Durchgangsöffnung (38) der inneren Durchgangsöffnung (40) gegenüber angeordnet ist.

13. Vorrichtung nach einem der Ansprüche 1 bis 12, **dadurch gekennzeichnet, dass** das Adapterelement (18) die Form eines Halbrund-Hohlprofils aufweist.

14. Vorrichtung nach einem der Ansprüche 1 bis 13, **dadurch gekennzeichnet, dass** das Verbindungselement (16) um das Adapterelement (18) einen Schwenkbereich (44) zwischen 90° und 180°, vorzugsweise zwischen 95° und 135°, weiter vorzugsweise zwischen 100° und 120°, am meisten bevorzugt von 106° aufweist.

15. System umfassend ein Nutenprofil (14) mit einer sich entlang des Nutenprofils (14) erstreckenden Nut (46), einem Nutenstein (12), der entlang der Nut (46) gleitend gelagert ist und in einer Richtung senkrecht zum Nutenprofil (14) formschlüssig in der Nut (46) angeordnet ist, und eine Vorrichtung (10) nach einem der vorhergehenden Ansprüche, wobei das Adapterelement (18) mit dem Nutenstein (12) verbunden ist.

16. Adapterelement zum Verbinden mit dem Nutenstein (12) eines Nutenprofils (14), wobei das Adapterelement (18) zum schwenkbaren Lagern eines Verbindungselements (16) um das Adapterelement (18) ausgebildet ist, wobei das Adapterelement (18) ein Befestigungselement (34) und ein Gegenelement (26) für das Verbindungselement (16) aufweist, wobei das Gegenelement (26) in einem Innenraum (28) des Adapterelements (18) angeordnet ist und mit dem Verbindungselement (16) verbindbar ist, **dadurch gekennzeichnet, dass** der Innenraum (28) eine spaltförmige Öffnung (50), die sich zumindest teilweise entlang einer Schwenkrichtung, in der das Verbindungselement (16) gegenüber dem Adapterelement (18) verschwenkbar ist, zwischen dem Gegenelement (26) und dem Verbindungselement (16) erstreckt, aufweist und das Gegenelement (26) mittels des Befestigungselements (34) durch die spaltförmige Öffnung mit dem Verbindungselement (16) verbindbar ist.

## Claims

1. Device for connecting a connection profile or a fill element made of a brittle material with a sliding block (12) of a groove profile (14), wherein the device (10) comprises a connecting element (16) and an adapter element (18) for connection to the sliding block (12), wherein the connecting element (16) is mounted on the adapter element (18) so as to be pivotable about the adapter element (18), wherein the device (10) comprises a counter element (26) for the connecting element (16), wherein the counter element (26) is arranged in an inner space (28) of the adapter element (18) and is connected to the connecting element (16), **characterised in that** the inner space (28) comprises a gap-shaped opening (50) which extends at least partially between the counter element (26) and the connecting element (16) along a pivoting direction in which the connecting element (16) is pivotable with respect to the adapter element (18), and the counter element (26) is connected to the connecting element (16) by means of a fastening element (34) through the gap-shaped opening.

2. Device according to claim 1, **characterised in that** the adapter element (18) comprises an external sliding surface (20), wherein the external sliding surface (20) has the shape of a shell surface piece of a cylinder, wherein the connecting element (16) is mounted so as to slide on the external sliding surface (20).

3. Device according to claim 2, **characterised in that** the connecting element (16) is mounted so as to be pivotable about a cylinder axis (22) of the external sliding surface (20).

4. Device according to claim 2 or 3, **characterised in that** the connecting element (16) has a trough-shaped sliding surface (24), wherein the trough-shaped sliding surface (24) is formed so as to fit to a partial circumference of the external sliding surface (20).

5. Device according to any of claims 1 to 4, **characterised in that** the inner space (28) comprises at least one guiding element (30) for the counter element (26), wherein the counter element (26) is mounted slidingly on the at least one guiding element (30).

6. Device according to any of claims 1 to 5, **characterised in that** counter element (26) is rod-shaped and comprises a bore (32) with an inner thread for receiving an outer thread of a fastening element (34).

7. Device according to claim 4, **characterised in that** the at least one guiding element (30) is arranged opposite the gap-shaped opening (50).

8. Device according to any of claims 1 to 6, **characterised in that** the inner space (28) has an interior sliding surface (48) which extends at least partially between the counter element (26) and the connecting element (16), wherein the counter element (26) is mounted slidingly on the interior sliding surface (48).

9. Device according to claim 8, **characterised in that** the interior sliding surface (48) has the shape of a shell surface piece of a cylinder.

10. Device according to any of claims 2 to 9, **characterised in that** the adapter element (18) has a planar exterior surface element (42) for connecting to a sliding block (12), wherein the exterior surface element (42) is oriented away from the exterior sliding surface (20).

11. Device according to claim 10, **characterised in that** the planar exterior surface element has at least one interior passage opening (40) for the passage of a shaft of a fastening element (36) for connecting to a sliding block (12).

12. Device according to claim 11, **characterised in that** the exterior sliding surface (20) has at least one exterior passage opening (38) for the passage of a head of a fastening element (36) for connecting to a sliding block (12), wherein the exterior passage opening (38) is arranged opposite to the interior passage opening (40).

13. Device according to any of claims 1 to 12, **characterised in that** the adapter element (18) has the shape of a semicircular hollow profile.

14. Device according to any of claims 1 to 13, **characterised in that** the connecting element (16) has a pivoting range (44) about the adapter element (18) of between 90° and 180°, preferably between 95° and 135°, further preferably between 100° and 120°, most preferably of 106°.

15. System comprising a groove profile (14) having a groove (46) which extends along the groove profile (14), a sliding block (12) which is mounted so as to slide along the groove (46) and is arranged, in a direction perpendicular to the groove profile (14), in a positive-locking manner in the groove (46), and a device (10) according to any of the preceding claims, wherein the adapter element (18) is connected to the sliding block (12).

16. Adapter element for connection with the sliding block (12) of a groove profile (14), wherein the adapter element (18) is configured for the pivotable mounting of a connecting element (16) about the adapter element (18), wherein the adapter element (18) comprises a fastening element (34) and a counter element (26) for the connecting element (16), wherein the counter element (26) is arranged in an inner space (28) of the adapter element and can be connected to the connecting element (16), **characterised in that** the inner space (28) comprises a gap-shaped opening (50) which extends at least partially between the counter element (26) and the connecting element (16) along a pivoting direction in which the connecting element (16) is pivotable with respect to the adapter element (18), and the counter element (26) can be connected to the connecting element (16) by means of the fastening element (34) through the gap-shaped opening.

## Revendications

1. Dispositif pour relier un profilé de raccordement ou un élément de remplissage en un matériau fragile à un coulisseau (12) d'un profilé à rainures (14), dans lequel le dispositif (10) présente un élément de liaison (16) et un élément adaptateur (18) pour relier le coulisseau (12), dans lequel l'élément de liaison (16) est monté sur l'élément adaptateur (18) de manière à pouvoir pivoter autour de l'élément adaptateur (18), dans lequel le dispositif (10) présente un contre-élément (26) pour l'élément de liaison (16), dans lequel le contre-élément (26) est agencé dans un espace intérieur (28) de l'élément adaptateur (18) et est relié à l'élément de liaison (16), **caractérisé en ce que** l'espace intérieur (28) présente une ouverture en forme de fente (50) qui s'étend au moins partiellement le long d'une direction de pivotement, dans lequel l'élément de liaison (16) peut pivoter par rapport à l'élément adaptateur (18), s'étend entre le contre-élément (26) et l'élément de liaison (16), et le contre-élément (26) est relié à l'élément de liaison (16) au moyen d'un élément de fixation (34) à travers l'ouverture en forme de fente.

2. Dispositif selon la revendication 1, **caractérisé en ce que** l'élément adaptateur (18) comprend une surface de glissement extérieure (20), dans lequel la surface de glissement extérieure (20) présente la forme d'une pièce de surface d'enveloppe d'un cylindre, dans lequel l'élément de liaison (16) est monté de manière coulissante sur la surface de glissement extérieure (20).

3. Dispositif selon la revendication 2, **caractérisé en ce que** l'élément de liaison (16) est monté pivotant autour d'un axe cylindrique (22) de la surface de glissement extérieure (20).

4. Dispositif selon la revendication 2 ou 3, **caractérisé en ce que** l'élément de liaison (16) présente une surface de glissement en forme de gouttière (24), dans lequel la surface de glissement en forme de gouttière (24) est formée de manière à s'adapter à une circonférence partielle de la surface de glissement extérieure (20).

5. Dispositif selon l'une quelconque des revendications 1 à 4, **caractérisé en ce que** l'espace intérieur (28) présente au moins un élément de guidage (30) pour le contre-élément (26), dans lequel le contre-élément (26) est monté de manière coulissante sur ledit au moins un élément de guidage (30).

6. Dispositif selon l'une quelconque des revendications 1 à 5, **caractérisé en ce que** le contre-élément (26) est en forme de tige et comprend un alésage (32) muni d'un filetage interne pour recevoir un filetage externe d'un élément de fixation (34).

7. Dispositif selon la revendication 4, **caractérisé en ce que** le au moins un élément de guidage (30) est agencé en face de l'ouverture en forme de fente (50).

8. Dispositif selon l'une quelconque des revendications 1 à 6, **caractérisé en ce que** l'espace intérieur (28) présente une surface de glissement intérieure (48) qui s'étend au moins partiellement entre le contre-élément (26) et l'élément de liaison (16), dans lequel le contre-élément (26) est monté de manière coulissante sur la surface de glissement intérieure (48).

9. Dispositif selon la revendication 8, **caractérisé en ce que** la surface de glissement intérieure (48) présente la forme d'une pièce de surface d'enveloppe d'un cylindre.

10. Dispositif selon l'une quelconque des revendications 2 à 9, **caractérisé en ce que** l'élément adaptateur (18) présente un élément de surface extérieure (42) plan pour la liaison avec un coulisseau (12), dans lequel l'élément de surface extérieure (42) plan est orienté à l'opposé de la surface de glissement extérieure (20).

11. Dispositif selon la revendication 10, **caractérisé en ce que** l'élément de surface externe plan présente au moins une ouverture de passage interne (40) pour le passage d'une tige d'un élément de fixation (36) pour la liaison avec un coulisseau (12).

12. Dispositif selon la revendication 11, **caractérisé en ce que** la surface de glissement extérieure (20) présente au moins une ouverture de passage extérieure (38) pour le passage d'une tête d'un élément de fixation (36) pour la liaison avec un coulisseau (12), dans lequel l'ouverture de passage extérieure (38) est agencée en face de l'ouverture de passage interne (40).

13. Dispositif selon l'une quelconque des revendications 1 à 12, **caractérisé en ce que** l'élément adaptateur (18) présente la forme d'un profilé creux semi-circulaire.

14. Dispositif selon l'une quelconque des revendications 1 à 13, **caractérisé en ce que** l'élément de liaison (16) présente autour de l'élément adaptateur (18) une plage de pivotement (44) entre 90° et 180°, de préférence entre 95° et 135°, plus préférentiellement entre 100° et 120°, le plus préférentiellement de 106°.

15. Système comprenant un profilé rainuré (14) avec une rainure (46) s'étendant le long du profilé rainuré (14), un coulisseau (12) monté de manière coulissante le long de la rainure (46) et agencé de manière complémentaire dans la rainure (46) dans une direction perpendiculaire au profilé rainuré (14), et un dispositif (10) selon l'une quelconque des revendications précédentes, dans lequel l'élément adaptateur (18) est relié au coulisseau (12).

16. Élément adaptateur pour relier le coulisseau (12) d'un profilé rainuré (14), dans lequel l'élément adaptateur (18) est réalisé pour le montage pivotant d'un élément de liaison (16) autour de l'élément adaptateur (18), dans lequel l'élément adaptateur (18) présente un élément de fixation (34) et un contre-élément (26) pour l'élément de liaison (16), dans lequel le contre-élément (26) est agencé dans un espace intérieur (28) de l'élément adaptateur (18) et peut être relié à l'élément de liaison (16), **caractérisé en ce que** l'espace intérieur (28) présente une ouverture en forme de fente (50) qui s'étend au moins partiellement le long d'une direction de pivotement, dans laquelle l'élément de liaison (16) peut pivoter par rapport à l'élément adaptateur (18), entre le contre-élément (26) et l'élément de liaison (16), et le contre-élément (26) peut être relié à l'élément de liaison (16) au moyen de l'élément de fixation (34) à travers l'ouverture en forme de fente.
